# EUROPÄISCHE PATENTSCHRIFT

(11) **EP 2 384 637 B1**
(45) Veröffentlichungstag und Bekanntmachung des Hinweises auf die Patenterteilung: **01.01.2020**
(21) Anmeldenummer: 11003740.5
(22) Anmeldetag: 06.05.2011
(51) Int. Cl.: A22C 11/12, A22C 11/00

(54) **Vorrichtung zum Verschliessen von schlauchförmigen Verpackungen**
Device for closing tubular packages
Dispositif de fermeture d'emballages tubulaires

(30) Priorität: 07.05.2010 DE 202010006604 U
(43) Veröffentlichungstag der Anmeldung: 09.11.2011
(73) Patentinhaber: Tipper Tie technopack GmbH, 21509 Glinde (DE)
(72) Erfinder: Aderhold, Uwe, 21529 Kröppelshagen (DE); Jens, Thomas, 22927 Grosshansdorf (DE)
(74) Vertreter: Glawe, Delfs, Moll

(56) Entgegenhaltungen:
- EP-A2- 0 093 037
- DE-A1- 1 951 832
- DE-A1- 10 238 482
- DE-U1-202006 019 883
- DE-U1-202009 014 671

## Beschreibung

Die Erfindung bezieht sich auf eine Vorrichtung zum Verschließen von mit pastösem Füllgut gefüllten schlauchförmigen Verpackungen, insbesondere Würsten, nach dem Oberbegriff des Patentanspruchs 1, sowie auf die Verwendung einer solchen Vorrichtung für die Reinigung des Laufbands einer Laufbandeinrichtung.

Solchen Vorrichtungen ist normalerweise eine Füllmaschine vorgeschaltet, die Füllgut, z. B. Wurstbrät, durch ein Füllrohr drückt, über das ein einseitig verschlossener Verpackungsschlauch gerafft ist. Der Schlauch füllt sich und wird durch den Druck des nachstoßenden Füllguts nach und nach vom Rohr abgezogen, so dass sich ein gefüllter Verpackungstrang bildet, der sich in einer Förderrichtung vom Füllrohr wegbewegt. Gattungsgemäße Vorrichtungen bilden daraus mittels einer Verschließeinrichtung Abschnitte, also Würste, die beidseitig mit Verschlussklammern verschlossen sind.

Aufgrund der hohen Arbeitsgeschwindigkeit solcher Vorrichtung ist ein schneller Abtransport der Abschnitte wichtig. Es ist daher bekannt, Metallbleche als Rutschen auszubilden, über die die Abschnitte schnell wegbewegt werden. Noch schneller und zuverlässiger arbeiten Laufbänder, die die Abschnitte von der Verschließeinrichtung wegfördern (z. B. DE 20 2006 019 883 U1). Allerdings haben Laufbänder den Nachteil eines erhöhten Reinigungsaufwandes. Gattungsgemäße Vorrichtungen können leicht verunreinigt werden, etwa durch geplatzte Schläuche durch zu hohen Fülldruck oder Beschädigungen beim Verschließen. Es nützt dann wenig, mit einem Laufband eine leistungsfähige Abfördereinrichtung zu haben, deren Geschwindigkeitsvorteil durch längere Standzeiten beim Reinigen wieder aufgehoben wird.

Der Erfindung liegt die Aufgabe zu Grunde, eine Vorrichtung mit einem Laufband als Abfördereinrichtung zu schaffen, bei der ein schnelleres Reinigen möglich ist. Sie löst diese Aufgabe durch die Merkmale des Patentanspruchs 1. Die Unteransprüche betreffen vorteilhafte Weiterbildungen der Erfindung, Anspruch 12 eine vorteilhafte Verwendung.

Die Erfindung beruht zum einen auf dem Gedanken, dass die Laufbandeinrichtung als Baueinheit auch für die Reinigung als Ganzes belassen werden, also nicht demontiert werden sollte. Um dann aber die einzelnen Komponenten der Vorrichtung für eine Reinigung zugänglich zu machen, ist an sich eine Entfernung der kompletten Laufbandeinrichtung erforderlich, was insbesondere bei Laufbändern von mindestens 80 cm Länge aufgrund des Gewichts und der Sperrigkeit umständlich ist. Zum zweiten fußt die Erfindung daher auf der Überlegung, die Laufbandeinrichtung an der Vorrichtung zu belassen und lediglich so zu bewegen, dass die zu reinigenden Teile, die bei der in Arbeitsposition befindlichen Laufbandeinrichtung schwerer zugänglich sind, frei liegen. Zu diesen Teilen gehören nicht nur die Laufbandeinrichtung selbst, sondern auch die Verschließeinrichtung sowie umliegende Komponenten der Vorrichtung. Die Erfindung ermöglicht es, sie z. B. mit einem Wasserstrahl oder einem Lappen gut zu erreichen, ohne dass aufwendige Demontagemaßnahmen erforderlich sind. Auf diese Weise wird den Anforderungen sowohl an einen schnellen Abtransport als auch einer zügigen Reinigung gleichermaßen genügt.

Ein besonderer Vorteil der Erfindung liegt darin, dass sie es ermöglicht, das Laufband in der Ausschwenkposition laufen zu lassen. Dies kann für die Reinigung ausgenutzt werden, etwa indem ein Lappen auf das laufende Band gedrückt wird. Auch die sich drehenden Rollen können, etwa mit einem Wasserstrahl, zügig gesäubert werden.

Der Tragrahmen kann in beliebiger Weise, insbesondere auch mit Abdeckplatten als Gehäuse, ausgestaltet sein. Erforderlich ist, dass er die an ihm angeordneten Einrichtungen hinreichend sicher tragen kann. Eine Anordnung einer Einrichtung an dem Tragrahmen umfasst gleichermaßen eine Anordnung an einer Außenseite als auch eine Anordnung innerhalb des Tragrahmens. Vorzugsweise weist der Tragrahmen unterseitige Standfüße oder Rollen zum leichten Verschieben der Vorrichtung auf.

Eine Verschließeinrichtung umfasst insbesondere Verschließwerkzeuge. Im Normalfall sind das Stempel und Matrize, die eingerichtet sind, eine Relativbewegung aufeinander zu zu vollführen und dabei eine i. d. R. metallische Verschlussklammer um den Verpackungsschlauch herum zu biegen. Meist sind auch Verdrängungsmittel vorhanden, die vor diesem Verschließvorgang einen füllgutfreien Zopf des Verpackungsmaterials bilden, indem sie das Füllgut darin seitlich verdrängen. Es können auch Verschließwerkzeuge zum Setzen von zwei Klammern gleichzeitig vorhanden sein, so dass das hintere Ende eines vorlaufenden Abschnitts und das vordere Ende eines nachlaufenden Abschnitts gleichzeitig verschlossen werden können. In diesem Fall umfasst die Verschließeinrichtung meist auch ein Messer, das den Verpackungsschlauch zwischen den beiden Verschlüssen durchtrennt, so dass getrennte Abschnitte gebildet werden. Gerade bei solchen sog. Doppelclipautomaten erweist sich die Erfindung als besonders vorteilhaft, da sie für sehr hohe Produktionsgeschwindigkeiten ausgelegt sind und es hier sowohl auf schnellen Abtransport als auch auf schnelle Reinigung ankommt.

Dass die Laufbandeinrichtung über eine Aufhängung mit dem Tragrahmen verbunden ist, bedeutet nicht, dass die Aufhängung die einzige Verbindung zwischen Laufbandeinrichtung und Tragrahmen darstellt. Erforderlich ist allerdings, dass die Aufhängung imstande ist, die Laufbandeinrichtung sicher in verschiedenen Schwenkpositionen zu tragen.

Eine Laufbandeinrichtung umfasst insbesondere ein Laufband, Umlenkrollen und ein Gestell für die Umlenkrollen. Vorteilhafterweise umfasst die Laufbandeinrichtung auch einen Motor den Antrieb des Laufbandes. Dann muss nicht der Antriebsstrang zwischen Motor und Laufband für das Verschwenken unterbrochen oder eingerichtet werden, was Bauaufwand und Wartung erheblich vereinfacht.

Die Schwenkachse muss nicht vertikal im strengen Sinne sein. Toleranzschwankungen von ± 5° um die Vertikale (Richtung der Schwerkraft) sind inbegriffen. Die Verschwenkung um die vertikale Achse stellt sicher, dass die Laufbandeinrichtung auch in der Ausschwenkposition ohne Sicherung durch gesonderte Mittel in Position bleibt. Auch bei geneigtem oder abschüssigem Laufband soll die Schwenkachse vertikal liegen.

Vorteilhafterweise weist die Aufhängung einen Anschlag auf, der ein Verschwenken über die Ausschwenkposition hinaus verhindert. Hierdurch wird der Gefahr von Verletzungen oder Beschädigungen umstehender Personen bzw. Gerätschaften durch ein versehentlich zu weit ausschwenkendes Laufband entgegen gewirkt.

Vorteilhafterweise beträgt Winkel zwischen Arbeitsposition und Ausschwenkposition zwischen 45° und 90°, weiter vorzugsweise zwischen 50° und 70°. Es hat sich gezeigt, dass ein Winkel im Bereich von 60° oder genau bei 60° gut geeignet für die Zugänglichmachung der zu reinigenden Stellen ist.

Vorteilhafterweise ist die Verbindung zwischen Aufhängung und Laufbandeinrichtung in Höhe des dritten und vierten Fünftels des Laufbandes angeordnet. Das der Verschließeinrichtung zugewandte Ende des Laufbandes kommt dann bei gleichem Ausschwenkwinkel besser frei, als wenn die Verbindung am von der Verschließeinrichtung abgewandten Ende des Laufbandes angeordnet wäre. Andererseits bleibt der Schwenkradius des überstehenden hinteren Endes des Laufbandes klein, so dass sich die Gefährdung umstehender Personen und Gerätschaften in Grenzen hält.

Vorteilhafterweise kann die Aufhängung derart ausgebildet sein, dass dem Verschwenken eine translatorische Bewegung in der Ebene senkrecht zur Schwenkachse überlagert ist. Dies kann beispielsweise durch eine Kulissenführung ermöglicht werden. Die Schwenkbewegung kann dann noch kompakter ausgeführt werden.

Vorteilhafterweise ist eine Positionsensoreinrichtung vorgesehen, die ein Signal in Abhängigkeit von der Position der Laufbandeinrichtung erzeugt. Dieses Signal lässt sich für die Erhöhung der Betriebssicherheit einsetzen, beispielsweise indem es einer der erfindungsgemäßen Vorrichtung zugeordneten Steuereinrichtung zugeführt ist, die so eingerichtet ist, dass die Vorrichtung einschließlich der Verschließeinrichtung nur in Gang gesetzt werden kann, wenn sich die Laufbandeinrichtung in Arbeitsposition befindet.

Vorteilhafterweise ist eine Verriegelungseinrichtung vorgesehen, die die Laufbandeinrichtung in der Arbeitsposition hält. Dies sichert gegen ein versehentliches Ausschwenken ab. Vorzugsweise ist die Verriegelungseinrichtung in einem Abstand von wenigstens zwei Fünfteln, vorzugsweise wenigstens der Hälfte, des Laufbandes von vertikalen Schwenkachse angeordnet. Damit wird das Bewegungsspiel der Laufbandeinrichtung in der Aufhängung gehemmt, dass andernfalls insbesondere beim Betrieb des Laufbandes zu schnellem Verschleiß führen kann.

Weiter vorzugsweise ist eine Verriegelungssensoreinrichtung vorgesehen ist, die ein Signal in Abhängigkeit davon erzeugt, dass die Verriegelung die Laufbandeinrichtung in der Arbeitsposition hält. Auch dieses Signal kann der bereits beschriebenen Steuereinrichtung zugeführt werden, die sichergestellt, dass die Vorrichtung nur in Gang gesetzt werden kann, wenn die Verriegelung betätigt ist.

Weiter ist es vorteilhaft, wenn eine Laufbandsteuereinrichtung vorgesehen ist, die so eingerichtet ist, dass das Laufband außerhalb der Arbeitsposition nur in Gang gesetzt werden kann, während eine Tasteinrichtung betätigt ist. Die Bedienperson, die die Reinigung vornimmt, muss die Tasteinrichtung also betätigten, z. B. eine Taste gedrückt halten, damit das Laufband läuft. Sie kann dann in der freien Hand einen Schlauch oder Lappen halten, mit dem sie das Laufband reinigen kann. Wendet sich die Person dann anderen Komponenten zu, wird sie die Tasteinrichtung loslassen. Dass Laufband kommt dann zum Stillstand und stellt dann keine Gefahrenquelle mehr da, insbesondere wenn sich die Person bückt, um die Verschließeinrichtung zu säubern. Die Tasteinrichtung kann auch ein Pedal umfassen, so dass die Bedienperson beide Hände frei behält, um das Laufband zu reinigen. Die Laufbandsteuereinrichtung kann Teil einer anderen Steuereinrichtung der Vorrichtung sein.

Nachfolgend wird ein Ausführungsbeispiel der Erfindung anhand von Zeichnungen erläutert. Dabei zeigen:
- Fig. 1: eine erfindungsgemäße Vorrichtung in perspektivischer Ansicht;
- Fig. 2: dieselbe Vorrichtung in derselben Ansicht mit ausgeschwenktem Laufband;
- Fig. 3: dieselbe Vorrichtung mit ausgeschwenktem Laufband in Draufsicht.

Die als ganzes mit 1 bezeichnete erfindungsgemäße Vorrichtung weist einen Tragrahmen 2 auf, der auf Rollen steht und Gehäusekomponenten wie insbesondere eine vordere Abdeckhaube 3 umfasst. Darunter befindet sich bei 4 eine herkömmliche Verschließeinrichtung, die nicht im Einzelnen dargestellt ist. Mit dem Pfeil F ist eine Förderrichtung gekennzeichnet, in der ein mit Wurstbrät gefüllter Wurststrang von einer Füllmaschine zugeführt werden kann (nicht dargestellt), wozu das Gehäuse eine Öffnung 5 aufweist.

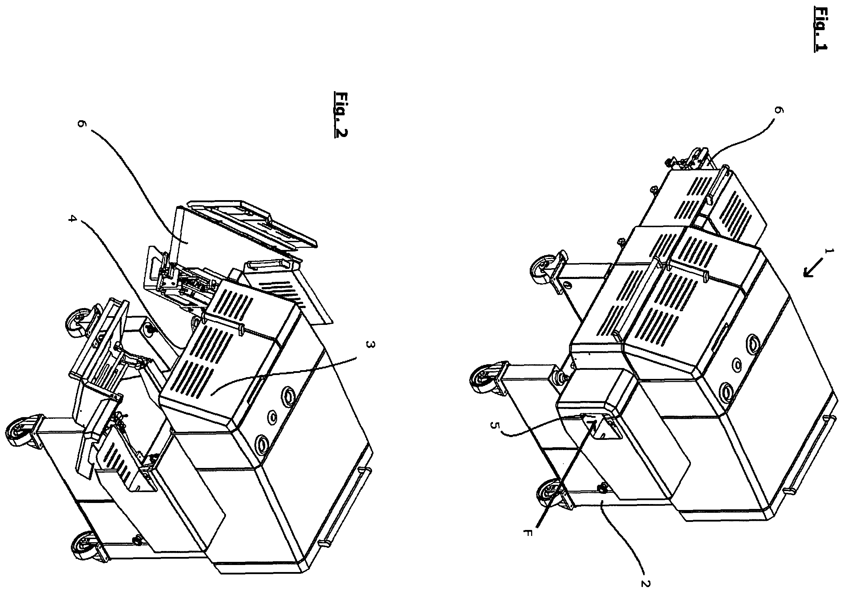

Nachdem die Verschließeinrichtung 4 die Würste vom Strang abgeteilt hat, gelangen diese auf ein Laufband 6, dass sie von der Vorrichtung weg befördert. In Fig. 1 ist das Laufband in Arbeitsposition und von weiteren Hauben des Tragrahmens 2 überdeckt. In Fig. 2 sind diese Hauben aufgeschwungen und das Laufband mitsamt Rollen und Antrieb in eine Ausschwenkposition verschwenkt. Sowohl das Laufband 6 und die Rollen als auch die Verschließeinrichtung 4 sind nun leicht für die Reinigung, insbesondere mit einem Schlauch zugänglich.

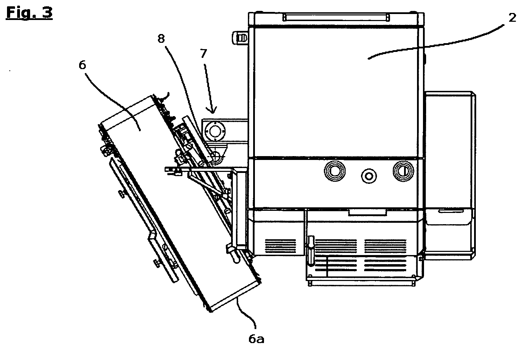

Fig. 3 zeigt eine insgesamt mit 7 bezeichnete Aufhängung für die Laufbandeinrichtung. Die Schwenkachse ist mit 8 bezeichnet. Das im Ausführungsbeispiel gezeigte Laufband ist 1 m lang. Die Aufhängung befindet sich 60 cm ab vom der Verschließeinrichtung 4 zugewandten Laufbandende 6a. Die Ausschwenkposition und die Arbeitsposition schließen einen Winkel von 60° ein.

## Patentansprüche

1. Vorrichtung zum Verschließen von mit pastösem Füllgut gefüllten schlauchförmigen Verpackungen, insbesondere Würsten, mit einem Tragrahmen (2), einer Verschließeinrichtung (4), die an dem Tragrahmen (2) angeordnet und eingerichtet ist, einen in einer Förderrichtung (F) bewegten gefüllten Verpackungsstrang in Abschnitte zu unterteilen und die so gebildeten Abschnitte mit Verschlussklammern zu verschließen, einer Laufbandeinrichtung, die an dem Tragrahmen (2) in Förderrichtung (F) hinter der Verschließeinrichtung (4) angeordnet und in ihrer Arbeitsposition eingerichtet ist, die Abschnitte von der Verschließeinrichtung (2) weg zu transportieren, **dadurch gekennzeichnet, dass** die Laufbandeinrichtung über eine Aufhängung (7) mit dem Tragrahmen (2) verbunden ist, welche ein Verschwenken der Laufbandeinrichtung um eine vertikale Schwenkachse (8) aus der Arbeitsposition in eine Ausschwenkposition ermöglicht, wobei es möglich ist, das Laufband in der Ausschwenkposition laufen zu lassen.

2. Vorrichtung nach Patentanspruch 1, **dadurch gekennzeichnet, dass** die Aufhängung (7) einen Anschlag aufweist, der ein Verschwenken über die Ausschwenkposition hinaus verhindert.

3. Vorrichtung nach einem der vorstehenden Patentansprüche, **dadurch gekennzeichnet, dass** der Winkel zwischen Arbeitsposition und Ausschwenkposition zwischen 45° und 90°, weiter vorzugsweise zwischen 50° und 70°, beträgt.

4. Vorrichtung nach einem der vorstehenden Patentansprüche, **dadurch gekennzeichnet, dass** die Verbindung zwischen Aufhängung (8) und Laufbandeinrichtung in Höhe des in Förderrichtung (F) dritten und vierten Fünftels des Laufbandes (6) angeordnet ist.

5. Vorrichtung nach einem der vorstehenden Patentansprüche, **dadurch gekennzeichnet, dass** die Laufbandeinrichtung einen Motor für den Antrieb des Laufbandes (6) umfasst.

6. Vorrichtung nach einem der vorstehenden Patentansprüche, **dadurch gekennzeichnet, dass** die Aufhängung (7) derart ausgebildet ist, dass dem Verschwenken eine translatorische Bewegung in der Ebene senkrecht zur Schwenkachse (8) überlagert ist.

7. Vorrichtung nach einem der vorstehenden Patentansprüche, **dadurch gekennzeichnet, dass eine** Positionssensoreinrichtung vorgesehen ist, die ein Signal in Abhängigkeit von der Position der Laufbandeinrichtung erzeugt.

8. Vorrichtung nach einem der vorstehenden Patentansprüche, **dadurch gekennzeichnet, dass** eine Verriegelungseinrichtung vorgesehen ist, die die Laufbandeinrichtung in der Arbeitsposition hält.

9. Vorrichtung nach Patentanspruch 8, **dadurch gekennzeichnet, dass** die Verriegelungseinrichtung in einem Abstand von wenigstens zwei Fünfteln, vorzugsweise wenigstens der Hälfte, des Laufbandes (6) von der Schwenkachse (8) angeordnet ist.

10. Vorrichtung nach einem der Patentansprüche 8 oder 9, **dadurch gekennzeichnet, dass** eine Verriegelungssensoreinrichtung vorgesehen ist, die ein Signal in Abhängigkeit davon erzeugt, dass die Verriegelung die Laufbandeinrichtung in der Arbeitsposition hält.

11. Vorrichtung nach einem der Patentansprüche 7 bis 10, **dadurch gekennzeichnet, dass** eine Laufbandsteuereinrichtung vorgesehen ist, die so eingerichtet ist, dass das Laufband (6) außerhalb der Arbeitsposition nur in Gang gesetzt werden kann, während eine Tasteinrichtung betätigt ist.

12. Verwendung einer Vorrichtung nach einem der vorstehenden Patentansprüche für die Reinigung des Laufbands (6) einer Laufbandeinrichtung (7).

## Claims

1. Apparatus for closing flexible-tube packs filled with pasty contents, in particular for closing sausages, having a carrying frame (2), having a closing device (4), which is arranged on the carrying frame (2) and is designed so that a filled pack strand which is moving in a conveying direction (F) is thereby subdivided into portions and the resulting portions are thereby closed using closure clips, and having a conveyor-belt device, which is arranged on the carrying frame (2) downstream of the closing device (4), as seen in the conveying direction (F), and, in its operating position, is intended to transport the portions away from the closing device (2), **characterized in that** the conveyor-belt device is connected to the carrying frame (2) via a mounting arrangement (7), which allows the conveyor-belt device to pivot about a vertical pivot axis (8) from the operating position into a pivoted-out position, wherein it is possible for the conveyor belt to operate in the pivoted-out position.

2. Apparatus according to Patent Claim 1, **characterized in that** the mounting arrangement (7) has a stop, which prevents pivoting beyond the pivoted-out position.

3. Apparatus according to either of the preceding patent claims, **characterized in that** the angle between the operating position and the pivoted-out position is between 45° and 90°, further preferably between 50° and 70°.

4. Apparatus according to one of the preceding patent claims, **characterized in that** the connection between the mounting arrangement (8) and conveyor-belt device is arranged level with the third and fourth fifths of the conveyor belt (6), as seen in the conveying direction (F).

5. Apparatus according to one of the preceding patent claims, **characterized in that** the conveyor-belt device comprises a motor for driving the conveyor belt (6).

6. Apparatus according to one of the preceding patent claims, **characterized in that** the mounting arrangement (7) is designed such that the pivoting is accompanied by a translatory movement in the plane perpendicular to the pivot axis (8).

7. Apparatus according to one of the preceding patent claims, **characterized by** the provision of a position-sensor device, which generates a signal in dependence on the position of the conveyor-belt device.

8. Apparatus according to one of the preceding patent claims, **characterized by** the provision of a locking device, which retains the conveyor-belt device in the operating position.

9. Apparatus according to Patent Claim 8, **characterized in that** the locking device is spaced apart from the pivot axis (8) by a distance equal to at least two fifths, preferably at least half, of the conveyor belt (6).

10. Apparatus according to either of Patent Claims 8 and 9, **characterized by** the provision of a locking-sensor device, which generates a signal in dependence on whether the locking means retains the conveyor-belt device in the operating position.

11. Apparatus according to one of Patent Claims 7 to 10, **characterized by** the provision of a conveyor-belt-control device, which is designed such that the conveyor belt (6), outside the operating position, can only be set in motion while a contact device is actuated.

12. Use of an apparatus according to one of the preceding patent claims for cleaning the conveyor belt (6) of a conveyor-belt device (7).

## Revendications

1. Dispositif de fermeture d'emballages tubulaires flexibles remplis d'une matière de remplissage pâteuse, en particulier de saucisses, avec un châssis porteur (2), un dispositif de fermeture (4), qui est disposé sur le châssis porteur (2) et qui est conçu pour diviser en portions un boyau d'emballage rempli déplacé dans une direction de transport (F) et pour fermer avec des agrafes de fermeture les portions ainsi formées, un dispositif de bande transporteuse, qui est disposé sur le châssis porteur (2) derrière le dispositif de fermeture (4) dans la direction de transport (F) et qui est configuré pour, dans sa position de travail, évacuer les portions à partir du dispositif de fermeture (2), **caractérisé en ce que** la bande transporteuse est reliée au châssis porteur (2) au moyen d'une suspension (7), qui permet un pivotement du dispositif de bande transporteuse autour d'un axe de pivotement vertical (8) de la position de travail à une position écartée, dans lequel il est possible de laisser tourner la bande transporteuse dans la position écartée.

2. Dispositif selon la revendication 1, **caractérisé en ce que** la suspension (7) présente une butée, qui empêche un pivotement au-delà de la position écartée.

3. Dispositif selon l'une quelconque des revendications précédentes, **caractérisé en ce que** l'angle entre la position de travail et la position écartée vaut entre 45° et 90°, de préférence encore entre 50° et 70°.

4. Dispositif selon l'une quelconque des revendications précédentes, **caractérisé en ce que** la liaison entre la suspension (8) et le dispositif de bande transporteuse est disposée à hauteur du troisième et du quatrième cinquièmes de la bande transporteuse (6) dans la direction de transport (F).

5. Dispositif selon l'une quelconque des revendications précédentes, **caractérisé en ce que** le dispositif de bande transporteuse comprend un moteur pour l'entraînement de la bande transporteuse (6).

6. Dispositif selon l'une quelconque des revendications précédentes, **caractérisé en ce que** la suspension (7) est réalisée de telle manière qu'un mouvement de translation dans le plan perpendiculaire à l'axe de pivotement (8) soit superposé au pivotement.

7. Dispositif selon l'une quelconque des revendications précédentes, **caractérisé en ce qu'**il est prévu un dispositif de détecteur de position, qui produit un signal en fonction de la position du dispositif de bande transporteuse.

8. Dispositif selon l'une quelconque des revendications précédentes, **caractérisé en ce qu'**il est prévu un dispositif de verrouillage, qui maintient le dispositif de bande transporteuse dans la position de travail.

9. Dispositif selon la revendication 8, **caractérisé en ce que** le dispositif de verrouillage est disposé à une distance d'au moins deux cinquièmes, de préférence d'au moins la moitié de la bande transporteuse (6) à partir de l'axe de pivotement (8).

10. Dispositif selon une des revendications 8 ou 9, **caractérisé en ce qu'**il est prévu un dispositif de détecteur de verrouillage, qui produit un signal en fonction du fait que le verrouillage maintient le dispositif de bande transporteuse dans la position de travail.

11. Dispositif selon l'une quelconque des revendications 7 à 10, **caractérisé en ce qu'**il est prévu un dispositif de commande de bande transporteuse, qui est configuré de telle manière que la bande transporteuse (6) ne puisse être mise en marche hors de la position de travail que pendant qu'un dispositif de touche est actionné.

12. Utilisation d'un dispositif selon l'une quelconque des revendications précédentes pour le nettoyage de la bande transporteuse (6) d'un dispositif de bande transporteuse (7).
